# EUROPEAN PATENT SPECIFICATION

(11) **EP 3 990 870 B1**
(45) Date of publication and mention of the grant of the patent: **03.04.2024**
(21) Application number: 20767903.6
(22) Date of filing: 21.08.2020
(51) Int. Cl.: G01F 1/60, G01F 1/58

(54) **MAGNETIC FLOWMETER**
MAGNETISCHER FLUSSMESSER
DÉBITMÈTRE MAGNÉTIQUE

(30) Priority: 05.09.2019 US 201962896124 P; 30.09.2019 US 201916587886
(43) Date of publication of application: 04.05.2022
(73) Proprietor: Micro Motion, Inc., Boulder, CO 80301 (US)
(72) Inventor: AMERI, Masoud, Maple Plain, Minnesota 55359 (US); FOSS, Scot Ronald, Eden Prairie, Minnesota 55346 (US); DREIER, Jared James, Chaska, Minnesota 55318 (US)
(74) Representative: Vossius & Partner Patentanwälte Rechtsanwälte mbB
(86) International application number: PCT/US2020/047432
(87) International publication number: WO 2021/045915

(56) References cited:
- WO-A1-2018/215034
- FR-A1- 2 521 289
- JP-A- H03 122 523
- RU-C1- 2 645 834
- US-A- 4 784 000
- US-A- 5 905 206

## Description

### FIELD

Embodiments of the present disclosure relate to magnetic flowmeters and, more specifically, to techniques for controlling the magnetic field used in flow rate measurements.

### BACKGROUND

Precise and accurate flow control is critical to a wide range of fluid processing applications, including bulk fluid handling, food and beverage preparation, chemistry and pharmaceuticals, water and air distribution, hydrocarbon extraction and processing, environmental control, and a range of manufacturing techniques utilizing thermoplastics, thin films, glues, resins and other fluid materials, for example. Flow rate measurement technologies used in each particular application depend upon the fluids involved, and on the relevant process pressures, temperatures and flow rates.

Exemplary flow rate measuring technologies include turbine devices that measure flow as a function of mechanical rotation, pitot sensors and differential pressure devices that measure flow as a function of the Bernoulli effect or pressure drop across a flow restriction, vortex and Coriolis devices that measure flow as a function of vibrational effects, and mass flowmeters that measure flow as a function of thermal conductivity. Magnetic flowmeters are distinguished from these technologies by characterizing a flow based on Faraday's Law, which depends upon electromagnetic interactions rather than mechanical or thermodynamic effects. In particular, magnetic flowmeters rely upon the conductivity of the process fluid, and the electromotive force (EMF) induced as the fluid flows through a region of magnetic field.

Conventional magnetic flowmeters include a sensor section and a transmitter section. The transmitter section includes a current generator that drives a current through a coil of the sensor section to generate a magnetic field across the pipe section. The magnetic field induces the EMF or potential difference (voltage) across the flow that is proportional to the velocity of the flow. The magnetic flowmeter measures the flow rate based on the voltage difference, which is detected by the sensor section.

The accuracy of the flow rate measurement depends on many factors, one of which is the accurate generation of the magnetic field across the flow. An operating setpoint directs the current generator to generate the current that will produce a desired magnetic field across the flow. The current may be periodically sampled to ensure that it matches the operating setpoint.

The current generator current may be transmitted from the current generator through a transmission line to the coil of the sensor section. Under some circumstances, such as when the transmission line is long (e.g., 10-1000 feet), for example, a mismatch may occur between the transmission line characteristic impedance and the current generator and/or the sensor section. Such an impedance mismatch can result in voltage/current wave reflections at the mismatched impedances that may produce standing current/voltage waves in the transmission line.

Such standing waves may adversely affect the accuracy of the current generator current samples. Thus, the sampled current generator current may not match the actual current generator current being supplied to the coil of the sensor section. As a result, the current generator current and the corresponding magnetic field may not meet the desired operational parameters of the magnetic flowmeter for accurate flow rate measurements.

JP H03122523 A discloses a magnetic flowmeter, wherein a signal having a period for supply of an excitation current and a signal for which random pause periods are made to occur alternately are sent to an excitation current generating element, which sends an excitation current to the coil. A random variation in the period of pause of the excitation current is synchronous with a change in a sampling pulse and thereby an excitation frequency is varied randomly, to enable removal of noise.

RU 2645834 C1 discloses an electromagnetic flowmeter and method for determining the flow in large diameter pipelines, including a current driver, a current sensor based on mounting precision resistor and a passive filter on chip resistors.

### SUMMARY

Embodiments of the present disclosure are directed to magnetic flowmeters for measuring a flow rate of a fluid flow, and methods of controlling magnetic flowmeters. In one embodiment, the magnetic flow meter includes a flow tube assembly, an electromotive force (EMF) sensor, a power amplifier, a current sampling circuit, and a controller. The flow tube assembly includes a pipe section configured to receive the fluid flow, and a coil configured to receive a coil current and produce a magnetic field across the fluid flow that induces an EMF in the fluid flow that is proportional to the flow rate. The EMF sensor is arranged to sense the EMF and generate an output indicating the induced EMF. The power amplifier is configured to generate unfiltered current pulses at a first frequency. The power amplifier includes a low pass filter that attenuates the unfiltered current pulses to form coil current pulses at a second frequency that form the coil current. The current sampling circuit is configured to capture a series of samples of the coil current pulses at a sampling frequency. The controller is configured to change a relationship between the sampling frequency and the first frequency, and adjust the coil current based on the samples.

Another embodiment of the magnetic flowmeter includes a flow tube assembly, an EMF sensor, a power amplifier, a current sampling circuit, and a controller. The flow tube assembly includes a pipe section configured to receive the fluid flow, and a coil configured to receive a coil current and produce a magnetic field across the fluid flow that induces an EMF in the fluid flow that is proportional to the flow rate. The EMF sensor is arranged to sense the EMF and generate an output indicating the induced EMF. The power amplifier is configured to generate unfiltered current pulses at a first frequency. Each of the unfiltered current pulses is generated within a pulse period after a pulse delay from the beginning of the pulse period. The power amplifier includes a low pass filter that attenuates the unfiltered current pulses to form coil current pulses at a second frequency that form the coil current. The current sampling circuit is configured to capture a series of samples of the coil current pulses at a sampling frequency. The controller is configured to adjust the pulse delay to change a relationship between the sampling frequency and the first frequency of the unfiltered current pulses, and adjust the coil current based on the samples.

In one embodiment of the method, a fluid flow is received through a pipe section of a flow tube assembly. Unfiltered current pulses are generated at a first frequency using a power amplifier. Each of the unfiltered current pulses is generated within a pulse period corresponding to the first frequency. The unfiltered current pulses are attenuated using a low pass filter of the power amplifier to form coil current pulses at a second frequency that form a coil current. The coil current pulses include remnant signals of the unfiltered current pulses. The coil current pulses are driven through a coil of the flow tube assembly in alternating directions. A magnetic field is generated across the fluid flow that induces an EMF in the fluid flow that is proportional to the flow rate. One of the coil current pulses is sampled at a sampling point within each pulse period using a current sampling circuit. A relationship between the sampling points and the remnant signals of the unfiltered current pulses is unique for each sampling point so that the sampling points are not synchronized with the remnant signals. The coil current is adjusted based on the current pulse samples using a controller.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the Background.

### BRIEF DESCRIPTION OF THE DRAWINGS

FIG. 1 is a simplified diagram of an exemplary industrial process measurement system, in accordance with embodiments of the present disclosure
FIG. 2 is a simplified diagram of an exemplary magnetic flowmeter, in accordance with embodiments of the present disclosure.
FIGS. 3 and 4 are simplified diagrams of an exemplary programmable bi-directional current generator, in accordance with embodiments of the present disclosure.
FIGS. 5 and 6 are charts illustrating exemplary control signals from a controller to pairs of complementary switches of an H bridge, in accordance with embodiments of the present disclosure.
FIGS. 7A and 7B are voltage charts respectively illustrating exemplary high frequency unfiltered current pulses, and the corresponding coil current pulses, in accordance with embodiments of the present disclosure.
FIGS. 7C and 7D are voltage charts illustrating resulting line voltages after filtering the unfiltered current pulses of FIGS. 7A and 7B.
FIG. 7E is a chart of coil current pulses generated in response to the line voltages of FIGS. 7C and 7C.
FIG. 8 is a schematic diagram of an exemplary magnetic flowmeter, in accordance with embodiments of the present disclosure.
FIG. 9 is a chart illustrating an example of voltage/current wave reflections due to a mismatch between the characteristic impedance of the transmission line and the impedances of the current generator and the coils.
FIG. 10 is a chart illustrating an exemplary standing voltage/current wave that may form due to the mismatched impedances.
FIG. 11 is a chart illustrating exemplary remnant signals on a coil current pulse, in accordance with embodiments of the present disclosure.
FIG. 12 is a voltage chart illustrating exemplary coil current pulses, in accordance with embodiments of the present disclosure.
FIG. 13 is a voltage chart illustrating exemplary remnant signals of a coil current and current signal sampling points that are synchronized with the remnant signals, in accordance with embodiments of the present disclosure.
FIGS. 14-16 are voltage charts illustrating exemplary remnant signals on a coil current pulse and current signal sampling points that are desynchronized with the remnant signals, in accordance with embodiments of the present disclosure.
FIG. 17 is a flowchart illustrating a method of controlling a magnetic flowmeter, in accordance with embodiments of the present disclosure.

### DETAILED DESCRIPTION OF ILLUSTRATIVE EMBODIMENTS

Embodiments of the present disclosure are described more fully hereinafter with reference to the accompanying drawings. Elements that are identified using the same or similar reference characters refer to the same or similar elements. The various embodiments of the present disclosure may, however, be embodied in many different forms and should not be construed as limited to the embodiments set forth herein. Rather, these embodiments are provided so that this disclosure will be thorough and complete, and will fully convey the scope of the present disclosure to those skilled in the art.

Specific details are given in the following description to provide a thorough understanding of the embodiments. However, it is understood by those of ordinary skill in the art that the embodiments may be practiced without these specific details. For example, circuits, systems, networks, processes, frames, supports, connectors, motors, processors, and other components may not be shown, or shown in block diagram form, in order to avoid obscuring the embodiments in unnecessary detail.

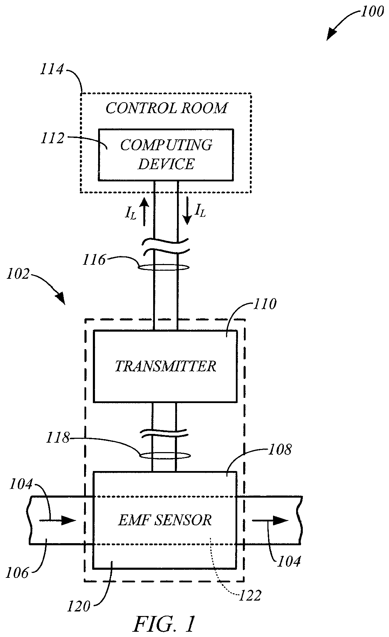

FIG. 1 is a simplified diagram of an exemplary industrial process measurement system 100, in accordance with embodiments of the present disclosure. The system 100 may be used in the processing of a material (e.g., process medium) to transform the material from a less valuable state into more valuable and useful products, such as petroleum, chemicals, paper, food, etc. For example, the system 100 may be used in an oil refinery that performs industrial processes that can process crude oil into gasoline, fuel oil, and other petrochemicals.

The system 100 includes a pulsed direct current (DC) magnetic flowmeter 102 that is configured to sense a flow rate of a process fluid flow 104, such as through a pipe 106, for example. The magnetic flowmeter 102 includes an electromotive force (EMF) sensor section 108 and a transmitter 110. The sensor section 108 is generally configured to measure or sense the flow rate of the fluid flow 104. The transmitter 110 is generally configured to control the sensor to measure the flow rate, and optionally communicate the measured flow rate to an external computing device 112, such as a computerized control unit, which may be remotely located from the flowmeter 102, such as in a control room 114 of the system 100.

The transmitter 110 may communicate with the external computing device 112 over a suitable process control loop. In some embodiments, the process control loop includes a physical communication link, such as a two-wire control loop 116, or a wireless communication link. Communications between the external computing device 112, and the transmitter section may be performed over the control loop 116 in accordance with conventional analog and/or digital communication protocols. In some embodiments, the two-wire control loop 116 includes a 4-20 milliamp control loop, in which a process variable may be represented by a level of a loop current I_{L} flowing through the two-wire control loop 116. Exemplary digital communication protocols include the modulation of digital signals onto the analog current level of the two-wire control loop 116, such as in accordance with the HART^{®} communication standard. Other purely digital techniques may also be employed including Foundation Fieldbus and Profibus communication protocols. Exemplary wireless versions of the process control loop include, for example, a wireless mesh network protocol, such as WirelessHART^{®} (IEC 62591) or ISA 100.11a (IEC 62734), or another wireless communication protocol, such as WiFi, LoRa, Sigfox, BLE, or any other suitable protocol.

Power may be supplied to the magnetic flowmeter 102 from any suitable power source. For example, the magnetic flowmeter 102 may be wholly powered by the loop current I_{L} flowing through the control loop 116. One or more power supplies may also be utilized to power the process magnetic flowmeter 102, such as an internal or an external battery. An electrical power generator (e.g., solar panel, a wind power generator, etc.) may also be used to power the magnetic flowmeter 102, or charge a power supply used by the magnetic flowmeter 102.

The transmitter 110 may be directly attached to the sensor section 108, such as a housing containing the sensor section 108, or located remotely (e.g., 10-1000 feet) from the sensor section 108. When the transmitter 110 is remotely located from the sensor section 108, electrical connections between the transmitter 110 and sensor section 108 may be provided by one or more connecting cables or transmission lines 118, which may be formed by cables, wires, a data bus, a control bus, or other suitable connection for electrical and data communication.

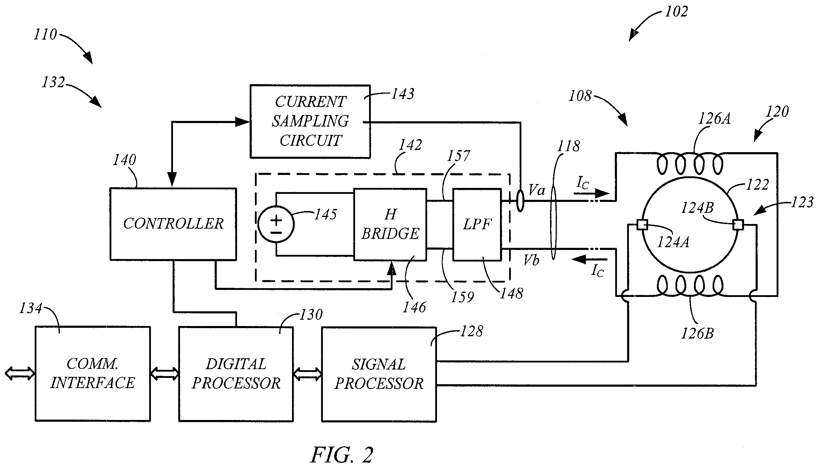

FIG. 2 is a simplified diagram of the magnetic flowmeter 102, in accordance with embodiments of the present disclosure. The sensor section 108 may include a flow tube assembly 120 having a pipe section 122, through which the fluid flow 104 travels, as shown in FIG. 1. The flow tube assembly 120 also includes an EMF sensor 123 having electrodes 124, such as electrodes 124A and 124B, and the flow tube assembly 120 includes one or more field coils or coil wires 126, such as coils 126A and/or 126B. The electrodes 124A and 124B, and the coils 126A and 126B may be positioned on opposing sides of the pipe section 122, as shown in FIG. 2.

The digital processor 130 may represent one or more processors that control components of the magnetic flowmeter 102 to perform one or more functions described herein in response to the execution of instructions, which may be stored in non-transitory, patent eligible memory. In some embodiments, the digital processor 130 provides control signals to the current generator 132 based on an operating setpoint of the magnetic flowmeter 102, to generate a coil current Ic comprising DC square wave current pulses that alternate direction through the coils 126.

In some embodiments, the current generator 132 includes a controller 140, a power amplifier 142, and a profile generator 144. The controller 140 may represent one or more processors that control components of the power amplifier 142 to perform one or more functions described herein, such as in response to control signals from the digital processor 130, and/or in response to the execution of instructions, which may be stored in non-transitory, patent eligible memory represented by the controller 140.

The controller 140 may periodically receive current level measurements of the coil current Ic from a current sampling circuit 143 as feedback to determine if an adjustment to the coil current Ic is required to match the setpoint level for the magnetic flowmeter 102, which is necessary for accurate flow rate measurements. The current sampling circuit 143 may take on any suitable form. For example, the current sampling circuit 143 may operate to sense a voltage that is related to the coil current Ic, such as at the location shown in FIG. 2, and convert the sampled voltage to a digital signal using an analog-to-digital converter that is presented to the controller 140 as a measured current level, for example. The controller 140 may adjust the coil current Ic based on the measured current level in an attempt to match the current level of the coil current Ic to the setpoint current level directed by the operating setpoint of the magnetic flowmeter 102. The sampled voltage over time may also be used to form the charts of the current profile of the coil current Ic or coil current pulses described herein.

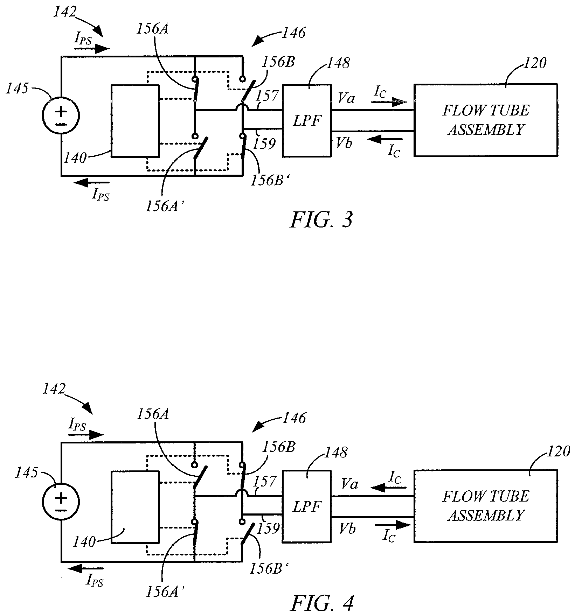

FIGS. 3 and 4 are simplified diagrams of an exemplary power amplifier 142, in accordance with embodiments of the present disclosure. The power amplifier 142 may be in the form of a voltage controlled current source, or another suitable current source. In the illustrated example, the power amplifier 142 includes a power supply 145, an H bridge 146 and a low pass filter (LPF) 148. The H bridge is configured to receive an unfiltered current I_{PS} from the power supply 145 (e.g., voltage source) that travels in the direction indicated in FIGS. 3 and 4. In some embodiments, the H bridge 146 comprises pairs of complementary switches 156 including a switch 156A and its complementary switch 156A', and a switch 156B and its complementary switch 156B'. The complementary nature of the switch pairs 156A and 156A', means that when switch 156A is open, switch 156A' is closed, and when switch 156A is closed, switch 156A' is open. This also applies to the complementary switches 156B and 156B'.

The controller 140 may include a microprocessor and gate driver that controls the switch pairs 156A and 156A' and 156B and 156B' to generate high frequency (e.g., 10-100 kHz) current pulses from the current I_{PS}, which are delivered to the LPF 148 over conductors 157 or 159. The low pass filter (LPF) 148 operates to attenuate the high frequency current pulses from the H bridge 146 output on conductors 157 or 159, to form the low frequency (e.g., 5-200 Hz) coil current pulses that form the coil current Ic.

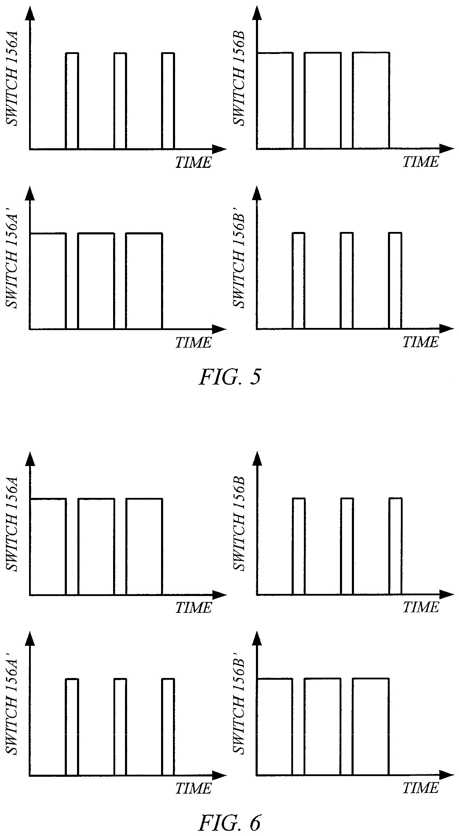

The controller 140 controls the direction the filtered coil current Ic flows through the coils 126 by modulating a duty cycle of the switches 156. For example, FIGS. 5 and 6 are charts illustrating exemplary control signals from the controller 140 to the switches 156 that cause the coil current Ic to flow in the direction indicated in FIGS. 4 and 3, respectively. A high signal in the charts corresponds to a closed state for the switches 156, and a low signal in the charts corresponds to an open state. As indicated in FIG. 5, the duty cycle for the switch 156A is less than the duty cycle for the switch 156B. As a result, the duty cycle for the switch 156A' is greater than the duty cycle for the switch 156B'. This causes the average voltage in the line 159 to be greater than the average voltage in line 157, resulting in the coil current Ic flowing in the direction indicated in FIG. 4. In FIG. 6, the duty cycle for the switch 156A is greater than the duty cycle for the switch 156B, and the duty cycle for the switch 156A' is less than the duty cycle for the switch 156B'. This causes the average voltage in the line 157 to be greater than the average voltage in line 159, resulting in the coil current Ic flowing in the direction indicated in FIG. 3. This configuration is distinct from conventional power amplifiers of magnetic flowmeters 102 that use an H bridge to simply route a current from a power supply in alternating directions through coils of a flow tube assembly.

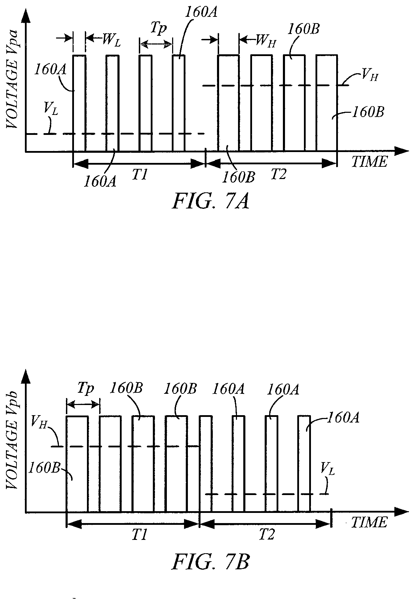

FIGS. 7A and 7B are voltage charts illustrating exemplary high frequency current pulses 160, such as pulses160A and 160B, output from the H bridge 146 on line 157 having a voltage Vpa (FIG. 7A) and on line 159 having a voltage Vpb (FIG. 7B) prior to the LPF 148, in accordance with embodiments of the present disclosure. For example, a series of voltage pulses 160A having a period of Tp, and a corresponding frequency of 1/Tp (e.g., 10-100 kHz) on the line 157 from the H bridge 146 during the pulse or excitation period T1 may each have a pulse width W_{L}, as shown in FIG 7A. Over the course of the pulse period T1, at which the coil current Ic changes direction, the pulses 160A have average voltage V_{L}. Likewise, a series of high frequency voltage pulses 160B on line 157 from the H bridge 146 during the pulse period T2 may each have a pulse width W_{H}, as shown in FIG. 7B. Over the course of the period T2, the average voltage pulses 160B have an average voltage V_{H}. Line 159 from the H bridge 146 has pulses 160B during the pulse period T1, and 160A during the pulse period T2, which are complementary to those on line 157 during the same periods, as indicated in FIG. 7B.

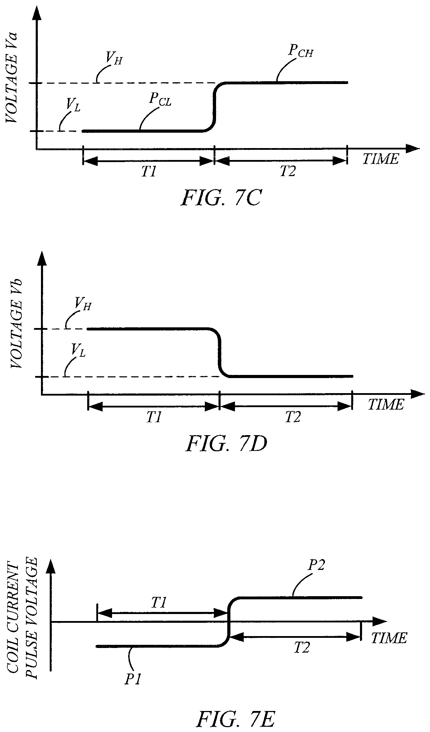

FIGS. 7C and 7D illustrate the voltages Va and Vb (FIGS. 2, 3 and 4) after the LPF 148, which attenuates the high frequency pulses 136A and 136B on lines 157 and 159. The voltages Va and Vb determined the direction and magnitude of the coil current pulses that form the coil current Ic. For example, during the pulse period T1, the voltage Va is less than the voltage Vb. This causes the coil current Ic to flow in the direction indicated in FIG. 4. During the period T2, the voltage Va is greater than the voltage Vb, thus causing the coil current Ic to flow in the direction indicated in FIGS. 2 and 3.

FIG. 7E is a voltage chart illustrating the coil current pulse voltage over the periods T1 and T2, such as the voltage sampled by the current sampling circuit 143. As shown in FIG. 7E, the voltage of the coil current pulse P1 over the period T1 is negative, and the voltage of the coil current pulse P2 is positive over the period T2.

The coil current Ic is delivered to the field coils 126A and 126B of the flow tube 120 through a suitable electrical connection, such as the transmission line 118 shown in FIGS. 1 and 2. This causes the coils 126A and/or 126B to generate a magnetic field across the pipe section 122 that changes direction at the excitation frequency (e.g., 1/T). The process fluid flow 104 traveling through the interior of pipe section 122 functions as a moving conductor that induces EMF in the fluid in accordance with Faraday's law of electromagnetic induction. The electrodes 124A and 124B, which are either capacitively coupled to the conductive process fluid or in direct electrical contact with the process fluid, pick up the voltages present in the fluid flow 104. The difference in the voltages at the electrodes 124A and 124B is proportional to the rate of the fluid flow 104.

The signal processor 128 of the transmitter 110 is connected to the electrodes 124A and 124B. The flow tube assembly 120 may be electrically grounded to the pipe section 122, to a flange or pipe section upstream or downstream of the pipe section 122, or to another suitable ground connection. The digital processor 130 controls the signal processor 128 to sample the voltage difference between the electrodes 124A and 124B, and provide the measured voltage difference to the digital processor 130, using any suitable technique. This may involve converting an analog differential voltage signal to a digital value that is supplied to the digital processor 130, for example. The digital processor 130 may perform further signal processing of measured differential voltage to establish a flow rate measurement of the flow rate of the process fluid flow 104. The measured flow rate may be communicated to the computing device 112 using the communications interface 134, such as through one of the wired or wireless communication protocols discussed above.

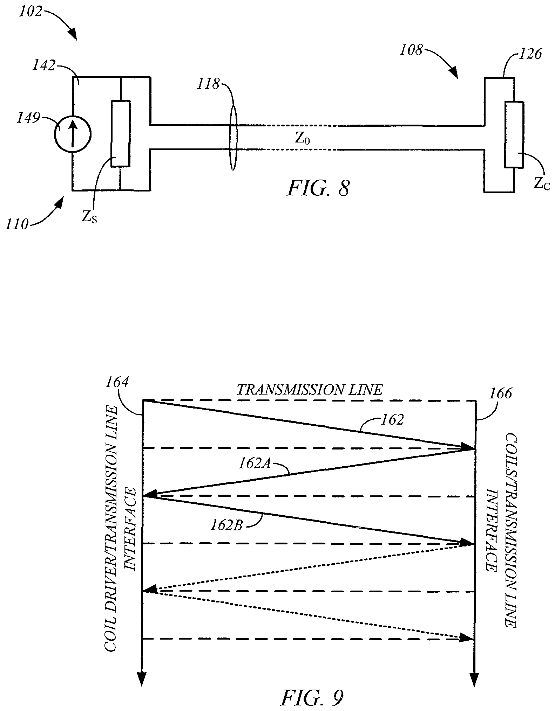

FIG. 8 is a schematic diagram of the power amplifier 142 of the transmitter 110, the coils 126 of the sensor section 108, and the transmission line 118 connecting the power amplifier 142 to the coils 126. The power amplifier 142 is represented by a current source 149 and an impedance Z_{S}, the one or more coils 126 are represented by an impedance Z_{C}, and the transmission line 118 has a characteristic impedance Z₀. When the impedance Z_{S} of the current generator and/or the impedance Zc of the coils does not match the characteristic impedance Z₀ of the transmission line, reflections of the coil current Ic may occur. Such a mismatch in impedances is most likely to occur when the sensor section 108 is connected to the transmitter 110 through a long transmission line 118 (e.g., 10-1000 feet).

The LPF 148 cannot perfectly attenuate the high frequency or unfiltered pulses 160 (FIGS. 7A and 7B). As a result, remnants of the unfiltered pulses 160 pass through the LPF 148 and are present on top of the coil current pulses P of the coil current Ic (or its harmonics). As a result, the reflections of the coil current Ic that occur with the impedance mismatch discussed above include reflections of the high frequency remnants of the unfiltered pulses 160, which could result in a standing wave of voltage/current wave reflections along the transmission line 118.

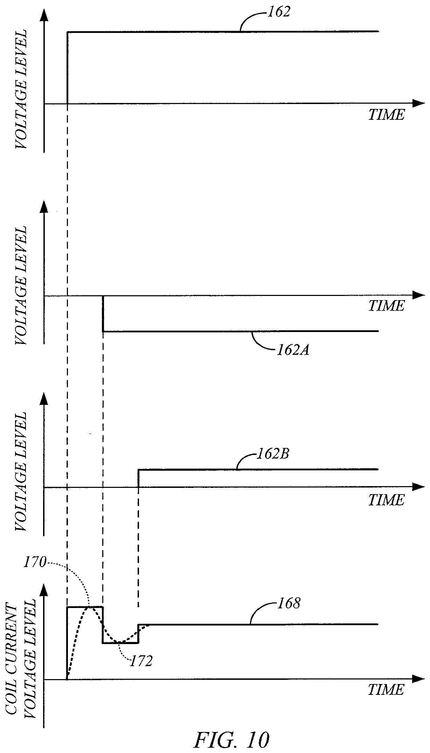

FIG. 9 is a chart illustrating an example of voltage/current wave reflections of the remnant signals 162 of the unfiltered pulses 160 on the coil current Ic that were not attenuated by the LPF 148 due to a mismatch between the characteristic impedance Z₀ of the transmission line 118 and the impedances Z_{S} and Zc of the current generator 132 and the one or more coils 126. FIG. 10 includes charts illustrating a simplified example of the formation of a standing voltage/current wave that may form due to the mismatched impedances.

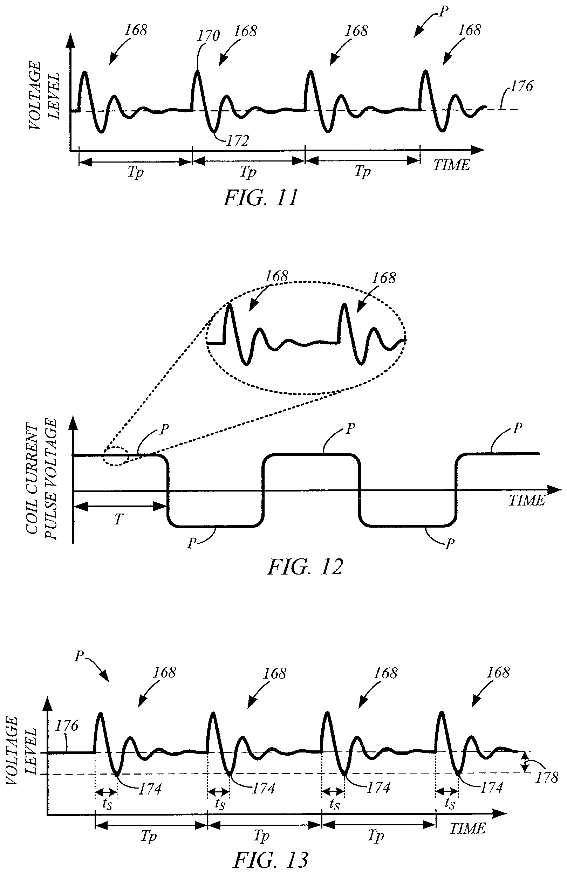

As shown in FIG. 9, when the remnant signals 162 are transmitted from the interface 164 of the power amplifier 142 and the transmission line 118 to the coils 126, a portion of the signals 162 is reflected from an interface 166 of the coils 126 and the transmission line 118 back along the transmission line 118 as a reflected voltage signal 162A due to the mismatch between the impedances Z₀ and Z_{C} at the interface 166. Due to the mismatch between the impedances Z₀ and Z_{C} at the interface 164, a portion of the signal 162A is reflected as a voltage signal 162B back along the transmission line 118. The resultant standing wave signal 168 may be observed as "ringing" along the transmission line 118 and includes hills 170 and valleys 172, as shown in FIG. 10. As a result, the coil current Ic may include high frequency voltage signals having a form similar to that of the remnant wave signal 168, as shown in FIG. 11. These remnant wave signals 168 are formed on top of the coil current pulses P, as indicated in the chart of FIG. 12.

In some embodiments, the controller 140 synchronizes the sampling of the coil current Ic with the pulse period Tp or the update cycle of the controller 140 at which the switches 156 of the H bridge are actuated and the pulses 160 are generated. This results in a fixed interval between the remnant wave signals 168 and the sampling point, at which the current sampling circuit 143 samples the coil current Ic pulses P. In the event that standing current/voltage wave reflections occur in the transmission line 118 due to mismatched impedances to form the remnant wave signals 168 on the coil current pulses P, as shown in FIG. 12, the synchronization between the signals 168 and the sampling point can result in the sampling points being at the same locations of the signals 168.

An example of this is illustrated in FIG. 13, in which the current sampling circuit 143 samples the coil current Ic at sampling points 174 at a fixed sampling delay ts relative to the beginning of each pulse period Tp of each current pulse 160 or remnant wave signal 168. In the illustrated example, the sampling of the coil current pulses P in this manner results in the sampling point 174 being located at a valley of the remnant wave signals 168, but it could also occur at another location along each signal 168, such as at a hill. Thus, each of the sampled coil current levels may deviate from the actual average current level 176 by an offset amount 178.

This error in the measured level of the coil current Ic may cause the controller 140 to set the coil current I_{C} to a level that is offset from the desired level directed by the digital processor 130 in accordance with the operating setpoint for the magnetic flowmeter 102. As a result, the magnetic field that is generated by the coils 126 in response to the offset coil current will be different from the magnetic field directed by the operating setpoint and required to accurately measure the flow rate of the fluid flow 104. Thus, the measured voltage difference between the electrodes 124A and 124B may not accurately indicate the flow rate of the fluid flow 104.

Embodiments of the present disclosure operate to improve coil current Ic measurements, such as in the presence of standing remnant wave signals 168 due to the impedance mismatch described above, for improved flow rate measurement accuracy. In general, the controller 140 of the current generator 132 is configured to change a relationship (e.g., desynchronize) between the pulses 160 output from the H bridge 146 having a period Tp or a frequency 1/Tp, and the sampling point 174, at which the coil current pulses P are sampled by the sampling circuit 143. As a result, the sampling circuit 143 samples different portions of the signals 168, rather than the same portion (FIG. 13) of the pulses 136 that occurs when the sampling point 174 is synchronized with the period Tp or the frequency 1/Tp.

A plurality of the sampled voltages of each coil current pulse P may be used to establish an average voltage level for the coil current pulse P that more accurately represents the actual level 176 of the coil current Ic that is supplied to the one or more coils 126. As a result, the current generator 132 can more accurately set the coil current pulses P to the voltage level required by the operating setpoint of the magnetic flowmeter 102, thereby providing improved control over the magnetic field generated by the coils 126, and more accurate flow rate measurements.

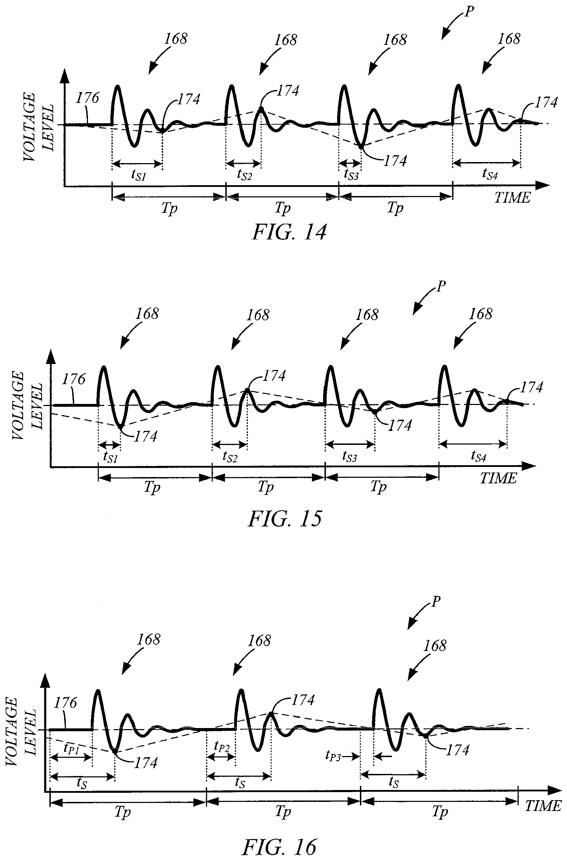

Different techniques for changing the relationship or desynchronizing the sampling points 174 from the remnant signals 168 will be discussed with reference to FIGS. 14-16, which are charts illustrating portions of exemplary coil current pulses P that include remnant signals 168 of the unfiltered current pulses 160. In some embodiments, the relationship between the remnant signals 168 and the sampling points 174 may be changed or desynchronized by introducing a phase shift or delay to the sampling points 174 relative to the remnant signals 168. For example, when the remnant signals 168 are generated at the start of each pulse period Tp and have a pulse frequency (1/Tp), the controller 140 may vary a sampling delay ts for each sampling point 174 that is measured from the beginning of each pulse period Tp. The sampling delay ts may be varied from a zero delay to the pulse period Tp. Thus, the coil current pulse P pulse may be sampled at a sampling point 174 that is delayed by a sampling delay tsi from the beginning of a pulse period, a second sampling point 174 may be delayed by a sampling delay t_{S2} from the beginning of the next pulse period Tp, a third sampling point 174 may delayed by a sampling delay t_{S3} from the next pulse period Tp, and a fourth sampling point 174 may be delayed by a sampling delay t_{S4} from the next pulse period Tp, and so on, where the delays t_{S1}, t_{S2}, t_{S3} and t_{S4}, are each different, as indicated in FIGS. 14 and 15. This causes different portions of the remnant signals 168 corresponding to sampling delays t_{S1}- t_{S4} to be sampled by the sampling circuit 143 and used by the controller 140 to determine the coil current level measurement. As a result, the repeated sampling of the coil current pulse P in a hill or valley of the remnant pulses 168 is avoided, and the error in the average of the current samples (dashed line) approaches zero over time.

In one embodiment, the controller 140 randomizes the sampling delays ts over a series of the unfiltered current pulse periods or cycles Tp, as generally shown in FIG. 14. Alternatively, the sampling delay can be programmed such that the sampling points 174 are located at discrete intervals along the pulse periods Tp to effectively perform a controlled sweep over the pulse period Tp of the remnant signals 168, as indicated in FIG. 15. Here, the sampling delays t_{S1}-t_{S4} may each be offset by a predetermined period that allows a portion or the entire pulse period T to be sampled by the sampling circuit 143. This may result in a more accurate coil current level measurement, than when the sampling point 174 is randomized.

In accordance with another embodiment, the relationship between the remnant signals 168 or the unfiltered current pulses 160 and the sampling points 174 is desynchronized by introducing a phase shift or pulse delay t_{P} to the generation of the current pulses 160 from the beginning of the pulse period Tp, while maintaining a fixed sampling frequency by fixing the sampling delay ts from the beginning of each current pulse period T. An example of this technique is illustrated in the chart of FIG. 16, in which the illustrated remnant signals 168 correspond to unfiltered current pulses 160 that were each generated after a different pulse delay t_{P}, such as t_{P1}, t_{P2} and t_{P3}, from the onset of the corresponding pulse period Tp, while the sampling delay ts remains fixed. This causes each of the sample points 174 to correspond to different portions of the current pulses 136 over a series of current pulses 136. As a result, the repeated sampling of the remnant signals 168 within a hill or valley is avoided, and an average of the samples may be obtained over a period of time that more accurately reflects the average level 176 of the coil current Ic. Thus, the error in the coil current level measurement approaches zero using this technique.

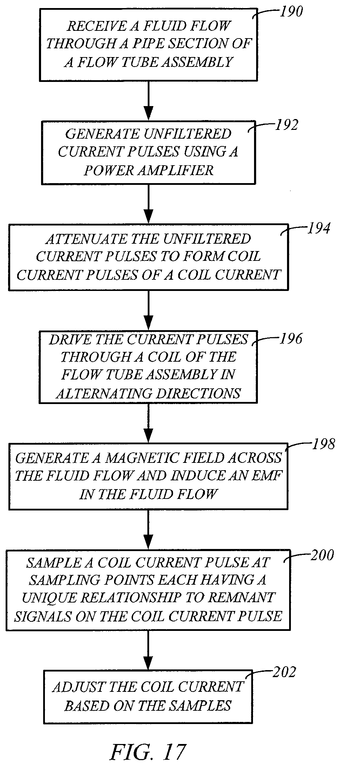

FIG. 17 is a flowchart illustrating a method of controlling a magnetic flowmeter 102, in accordance with embodiments of the present disclosure. At 190 of the method, a fluid flow 104 is received through the pipe section 122 of the flow tube assembly 120, as shown in FIG. 1. Unfiltered current pulses 160 (FIGS. 7A and 7B) are generated at 192 using the power amplifier 142 of the current generator 132, such as described above. The unfiltered current pulses 160 are generated at a high frequency (e.g., 10-100 kHz) and each pulse 160 is generated within a pulse period Tp (FIGS. 7A and 7B). The unfiltered current pulses 160 are attenuated using the LPF 148 of the power amplifier 142 (FIGS. 3 and 4) to form coil current pulses P (FIGS. 7E and 12) of a coil current Ic, at 194. The coil current pulses P include remnant signals 168 of the unfiltered current pulses 160 that were not completely attenuated by the LPF 148, such as shown in FIG. 12.

At 196 of the method, the coil current pulses P are driven through the one or more coils 126 in alternating directions. The formation of positive and negative coil current pulses P (FIG. 7E) that travel through the one or more coils 126 in alternating directions may be generated by the current generator 132 using the techniques described above.

At 198 of the method, a magnetic field is generated across the fluid flow 104 within the pipe section 122 in response to step 186, and an EMF is induced in the fluid flow 104 that is proportional to the flow rate of the fluid flow 104.

One of the coil current pulses P is sampled at a sampling point 147 within each pulse period Tp using the current sampling circuit 143, at 200 of the method. The relationship between the sampling points 174 and the corresponding current pulses are desynchronized in accordance with one of the techniques described above using the controller 140, such that the sampling points 174 have a unique relationship to the remnant signals 168. As a result, the sampling points 174 are not synchronized with the remnant signals 168, such as shown in FIG. 12. Thus, the method avoids the repeated sampling of the remnant signals 168 at the same location, such as at a hill 170 or a valley 172 (FIG. 11) of the remnant signals.

At 202, the coil current Ic is adjusted using the controller 140 based on the samples, such as to match an operating setpoint for the magnetic flowmeter 102. For example, the controller 140 may determine a coil current level measurement, such as a voltage of the coil current pulses P, based on the samples of the coil current pulses P taken by the sampling circuit 143, such as an average of the voltage levels indicated by the samples. Unlike when the sample points 174 are synchronized with the remnant signals 168 (FIG. 13), the captured current samples in accordance with the method cover various portions of the remnant signals 168. The resulting average of the samples provides an approximation of the level of the coil current Ic that is more accurate than when the remnant signals 168 are repeatedly sampled at the same hill or valley of the remnant signals 168. The controller 140 may compare the coil current level measurement to a desired coil current level that is based on the operating setpoint for the magnetic flowmeter 102, and adjust the coil current accordingly in step 202.

Although the embodiments of the present disclosure have been described with reference to preferred embodiments, workers skilled in the art will recognize that changes may be made in form and detail without departing from the scope of the present invention, which is defined by the appended claims.

## Claims

1. A magnetic flowmeter (102) for measuring a flow rate of a fluid flow (104), comprising:
a flow tube assembly (120) including a pipe section (122) configured to receive the fluid flow, and a coil (126A, 126B) configured to receive a coil current and produce a magnetic field across the fluid flow that induces an electromotive force, EMF, in the fluid flow that is proportional to the flow rate;
an EMF sensor (123) arranged to sense the EMF and generate an output indicating the induced EMF; and
a power amplifier (142) configured to generate unfiltered current pulses at a first frequency and including a low pass filter (148) that attenuates the unfiltered current pulses to form coil current pulses at a second frequency that form the coil current;
a current sampling circuit (143) configured to capture a series of samples of the coil current pulses at a sampling frequency; and
a controller (140) configured to change a relationship between the sampling frequency and the first frequency, and adjust the coil current based on the samples.

2. The magnetic flowmeter of claim 1, wherein:
the unfiltered current pulses each have a pulse period (Tp) corresponding to the first frequency;
the current sampling circuit samples the coil current pulses at a sampling delay (ts) from the beginning of each pulse period; and
the controller varies the sampling delay to change the relationship between the sampling frequency and the first pulse frequency.

3. The magnetic flowmeter of claim 2, wherein the controller randomizes the sampling delay.

4. The magnetic flowmeter of claim 2, wherein the controller shifts the sampling delay over the series of samples.

5. The magnetic flowmeter of claim 2, wherein:
the power amplifier comprises:
a power supply (145);
an H bridge (146) coupled to the power supply; and
the low pass filter configured to receive the unfiltered current pulses from the H bridge; and
the controller is configured to actuate pairs of complementary switches of the H bridge at varying duty cycles to generate the unfiltered current pulses and alternate the direction of the coil current pulses through the coil.

6. The magnetic flowmeter of claim 5, wherein:
the first frequency is 10-100 kHz; and
the second frequency is 5-200 Hz.

7. The magnetic flowmeter of claim 5, wherein:
the EMF sensor comprises first and second electrodes (124A, 124B) positioned on opposing sides of the fluid flow, each of the first and second electrodes configured to sense a voltage of the fluid flow; and
the magnetic flowmeter includes:
a signal processor (128) configured to receive the voltages sensed by the first and second electrodes and generate a digital voltage signal indicating a voltage difference between the first and second electrodes that is proportional to the EMF and the flow rate of the fluid flow; and
a digital processor (130) configured to process the digital voltage signal and establish a flow rate of the fluid flow.

8. The magnetic flowmeter of claim 7, including a communications interface (134) configured to communicate the flow rate to an external computing device over a two-wire process control loop that powers the magnetic flowmeter.

9. The magnetic flowmeter of claim 1,
wherein each of the unfiltered current pulses is generated within a pulse period (Tp) after a pulse delay (t_{P}) from the beginning of the pulse period; and
the controller is configured to adjust the pulse delay to change the relationship between the sampling frequency and the first frequency of the unfiltered current pulses.

10. The magnetic flowmeter of claim 9, wherein the controller randomizes the pulse delay.

11. The magnetic flowmeter of claim 9, wherein the controller shifts the pulse delay for each of the current pulses corresponding to the series of samples.

12. The magnetic flowmeter of claim 9, wherein:
the power amplifier comprises:
a power supply;
an H bridge coupled to the power supply; and
the low pass filter configured to receive the unfiltered current pulses from the H bridge through first and second conductors; and
the controller is configured to actuate pairs of complementary switches of the H bridge at varying duty cycles to generate the unfiltered current pulses and alternate the direction of the coil current pulses through the coil,
preferably, wherein:
the first frequency is 10-100 kHz; and
the second frequency is 5-200 Hz,
more preferably, wherein:
the EMF sensor comprises first and second electrodes positioned on opposing sides of the fluid flow, each of the first and second electrodes configured to sense a voltage of the fluid flow; and
the magnetic flowmeter includes:
a signal processor configured to receive the voltages sensed by the first and second electrodes and generate a digital voltage signal indicating a voltage difference between the first and second electrodes that is proportional to the EMF and the flow rate of the fluid flow; and
a digital processor configured to process the digital voltage signal and establish a flow rate of the fluid flow,
even more preferably, the magnetic flowmeter including a communications interface configured to communicate the flow rate to an external computing device over a two-wire process control loop that powers the magnetic flowmeter.

13. A method of controlling a magnetic flowmeter comprising:
receiving the fluid flow (104) through a pipe section (122) of a flow tube assembly (120);
generating unfiltered current pulses (160) at a first frequency using a power amplifier (142), each unfiltered current pulse generated within a pulse period (Tp) that corresponds to the first frequency;
attenuating the unfiltered current pulses using a low pass filter (148) of the power amplifier to form coil current pulses at a second frequency that form a coil current, wherein the coil current pulses include remnant signals (168) of the unfiltered current pulses;
driving the coil current pulses through a coil (126A, 126B) of the flow tube assembly in alternating directions;
generating a magnetic field across the fluid flow and inducing an electromotive force (EMF) in the fluid flow that is proportional to the flow rate in response to driving the coil current pulses through the coil;
sampling a coil current pulse at a sampling point (174) within each pulse period using a current sampling circuit (143), wherein a relationship between the sampling points and the remnant signals of the unfiltered current pulses is unique for each sampling point so that the sampling points (174) are not synchronized with the remnant signals (168); and
adjusting the coil current based on the current pulse samples using a controller.

14. The method of claim 13, wherein:
the sampling point for each sample is positioned at a sampling delay (ts) from the beginning of each pulse period; and
the method comprises adjusting the sampling delay for each sample using the controller.

15. The method of claim 14,
wherein adjusting the sampling delay for each sample comprises randomizing the sampling delay for each sample using the controller, or
wherein adjusting the sampling delay for each sample comprises shifting the sampling delay for each sample using the controller, or
wherein:
the unfiltered current pulses are generated after a pulse delay (t_{P}) from the beginning of each pulse period;
the sampling point for each sample is positioned at a fixed sampling delay from the beginning of each pulse period; and
the method comprises adjusting the pulse delay for each current pulse using the controller.

## Patentansprüche

1. Magnetischer Durchflussmesser (102) zum Messen der Durchflussrate einer Fluidströmung (104), aufweisend:
eine Strömungsrohranordnung (120) mit einem Rohrabschnitt (122) zum Aufnehmen der Fluidströmung und mit einer Spule (126A, 126B) zum Aufnehmen eines Spulenstroms und zum Erzeugen eines Magnetfeldes über die Fluidströmung, das eine elektromotorische Kraft, EMF, in der Fluidströmung induziert, die proportional zur Durchflussrate ist;
einen EMF-Sensor (123), der so angeordnet ist, dass er die EMF erfasst und eine Ausgabe erzeugt, die die induzierte EMF angibt; und
einen Leistungsverstärker (142), der eingerichtet ist, ungefilterte Stromimpulse mit einer ersten Frequenz zu erzeugen und ein Tiefpassfilter (148) aufweist, das die ungefilterten Stromimpulse dämpft, um Spulenstromimpulse mit einer zweiten Frequenz zu bilden, die den Spulenstrom bilden;
eine Stromabtastschaltung (143) zum Erfassen einer Reihe von Abtastwerten der Spulenstromimpulse mit einer Abtastfrequenz; und
eine Steuerung (140) zum Ändern eines Verhältnisses zwischen der Abtastfrequenz und der ersten Frequenz und zum Anpassen des Spulenstroms auf der Grundlage der Abtastwerte.

2. Magnetischer Durchflussmesser nach Anspruch 1, wobei:
die ungefilterten Stromimpulse jeweils eine Impulsperiode (Tp) haben, die der ersten Frequenz entspricht;
die Stromabtastschaltung die Spulenstromimpulse mit einer Abtastverzögerung (ts) ab dem Beginn jeder Impulsperiode abtastet; und
die Steuerung die Abtastverzögerung variiert, um das Verhältnis zwischen der Abtastfrequenz und der ersten Impulsfrequenz zu ändern.

3. Magnetischer Durchflussmesser nach Anspruch 2, wobei die Steuerung die Abtastverzögerung randomisiert festlegt.

4. Magnetischer Durchflussmesser nach Anspruch 2, wobei die Steuerung die Abtastverzögerung über die Reihe von Abtastwerten ändert.

5. Magnetischer Durchflussmesser nach Anspruch 2, wobei:
der Leistungsverstärker aufweist:
eine Stromversorgung (145);
eine H-Brücke (146), die mit der Stromversorgung verbunden ist; und
das Tiefpassfilter, das eingerichtet ist, die ungefilterten Stromimpulse von der H-Brücke aufzunehmen; und
die Steuerung eingerichtet ist, Paare von komplementären Schaltern der H-Brücke mit variierenden Tastverhältnissen zu betätigen, um die ungefilterten Stromimpulse zu erzeugen und die Richtung der Spulenstromimpulse durch die Spule zu wechseln.

6. Magnetischer Durchflussmesser nach Anspruch 5, wobei:
die erste Frequenz 10 bis 100 kHz beträgt; und
die zweite Frequenz 5 bis 200 Hz beträgt.

7. Magnetischer Durchflussmesser nach Anspruch 5, wobei:
der EMF-Sensor eine erste und eine zweite Elektrode (124A, 124B) umfasst, die auf gegenüberliegenden Seiten der Fluidströmung angeordnet sind, wobei die erste und
die zweite Elektrode jeweils eingerichtet sind, eine Spannung der Fluidströmung zu erfassen; und
der magnetische Durchflussmesser aufweist:
einen Signalprozessor (128) zum Aufnehmen der von der ersten und der zweiten Elektrode erfassten Spannungen und zum Erzeugen eines digitalen Spannungssignals, das eine Spannungsdifferenz zwischen der ersten und der zweiten Elektrode angibt, die proportional zu der EMF und der Durchflussrate der Fluidströmung ist; und
einen digitalen Prozessor (130) zum Verarbeiten des digitalen Spannungssignals und zum Ermitteln einer Durchflussrate der Fluidströmung.

8. Magnetischer Durchflussmesser nach Anspruch 7, umfassend eine Kommunikationsschnittstelle (134), die eingerichtet ist, die Durchflussrate über eine Zweidraht-Prozesssteuerungsschleife, die den magnetischen Durchflussmesser mit Energie versorgt, an ein externes Computergerät zu übermitteln.

9. Magnetischer Durchflussmesser nach Anspruch 1,
wobei jeder der ungefilterten Stromimpulse innerhalb einer Impulsperiode (T_{P}) nach einer Impulsverzögerung (t_{P}) ab dem Beginn der Impulsperiode erzeugt wird; und die Steuerung eingerichtet ist, die Impulsverzögerung anzupassen, um das Verhältnis zwischen der Abtastfrequenz und der ersten Frequenz der ungefilterten Stromimpulse zu ändern.

10. Magnetischer Durchflussmesser nach Anspruch 9, wobei die Steuerung die Impulsverzögerung randomisiert.

11. Magnetischer Durchflussmesser nach Anspruch 9, wobei die Steuerung die Impulsverzögerung für jeden der Stromimpulse, die der Reihe von Abtastwerten entsprechen, ändert.

12. Magnetischer Durchflussmesser nach Anspruch 9, wobei:
der Leistungsverstärker aufweist:
eine Stromversorgung;
eine H-Brücke, die mit der Stromversorgung verbunden ist; und
das Tiefpassfilter, das eingerichtet ist, die ungefilterten Stromimpulse von der H-
Brücke über einen ersten und einen zweiten Leiter aufzunehmen; und die Steuerung eingerichtet ist, Paare von komplementären Schaltern der H-Brücke mit variierenden Tastverhältnissen zu betätigen, um die ungefilterten Stromimpulse zu erzeugen und die Richtung der Spulenstromimpulse durch die Spule zu wechseln, wobei bevorzugt
die erste Frequenz 10 bis 100 kHz beträgt; und
die zweite Frequenz 5 bis 200 Hz beträgt,
wobei ferner bevorzugt
der EMF-Sensor eine erste und eine zweite Elektrode umfasst, die auf gegenüberliegenden Seiten der Fluidströmung angeordnet sind, wobei die erste und die zweite Elektrode eingerichtet sind, eine Spannung der Fluidströmung zu erfassen; und
der magnetische Durchflussmesser umfasst:
einen Signalprozessor zum Aufnehmen der von der ersten und der zweiten Elektrode erfassten Spannungen und zum Erzeugen eines digitalen Spannungssignals, das eine Spannungsdifferenz zwischen der ersten und der zweiten Elektrode angibt, die proportional zu der EMF und der Durchflussrate der Fluidströmung ist; und
einen digitalen Prozessor zum Verarbeiten des digitalen Spannungssignals und zum Ermitteln einer Durchflussrate der Fluidströmung,
wobei besonders bevorzugt der magnetische Durchflussmesser eine Kommunikationsschnittstelle umfasst, die eingerichtet ist, die Durchflussrate über eine Zweidraht-Prozesssteuerungsschleife, die den magnetischen Durchflussmesser mit Energie versorgt, an ein externes Computergerät zu übermitteln.

13. Verfahren zur Steuerung eines magnetischen Durchflussmessers, umfassend:
Aufnehmen der Fluidströmung (104) durch einen Rohrabschnitt (122) einer Strömungsrohranordnung (120);
Erzeugen ungefilterter Stromimpulse (160) mit einer ersten Frequenz unter Verwendung eines Leistungsverstärkers (142), wobei jeder ungefilterte Stromimpuls innerhalb einer Impulsperiode (Tp) erzeugt wird, die der ersten Frequenz entspricht; Dämpfen der ungefilterten Stromimpulse unter Verwendung eines Tiefpassfilters (148) des Leistungsverstärkers, um Spulenstromimpulse mit einer zweiten Frequenz zu bilden, die den Spulenstrom bilden, wobei die Spulenstromimpulse Restsignale (168) der ungefilterten Stromimpulse enthalten;
Treiben der Spulenstromimpulse durch eine Spule (126A, 126B) der Strömungsrohranordnung in wechselnden Richtungen;
Erzeugen eines Magnetfeldes über die Fluidströmung und Induzieren einer elektromotorischen Kraft (EMF) in der Fluidströmung, die proportional zu der Durchflussrate ist, als Reaktion auf das Treiben der Spulenstromimpulse durch die Spule;
Abtasten eines Spulenstromimpulses an einem Abtastpunkt (174) innerhalb jeder Impulsperiode unter Verwendung einer Stromabtastschaltung (143), wobei ein Verhältnis zwischen den Abtastpunkten und den Restsignalen der ungefilterten Stromimpulse für jeden Abtastpunkt eindeutig ist, so dass die Abtastpunkte (174) nicht mit den Restsignalen (168) synchronisiert sind; und
Anpassen des Spulenstroms auf der Grundlage der Stromimpulsabtastungen unter Verwendung einer Steuerung.

14. Verfahren nach Anspruch 13, wobei:
der Abtastpunkt für jede Abtastung mit einer Abtastverzögerung (ts) ab dem Beginn jeder Impulsperiode positioniert wird; und
das Verfahren das Abstimmen der Abtastverzögerung für jede Abtastung unter Verwendung der Steuerung umfasst.

15. Verfahren nach Anspruch 14,
wobei das Abstimmen der Abtastverzögerung für jede Abtastung das randomisierte Festlegen der Abtastverzögerung für jede Abtastung unter Verwendung der Steuerung umfasst, oder
wobei das Abstimmen der Abtastverzögerung für jede Abtastung das Verschieben der Abtastverzögerung für jede Abtastung unter Verwendung der Steuerung umfasst, oder wobei:
die ungefilterten Stromimpulse nach einer Impulsverzögerung (t_{P}) ab dem Beginn jeder Impulsperiode erzeugt werden;
der Abtastpunkt für jede Abtastung bei einer festen Abtastverzögerung ab dem Beginn jeder Impulsperiode positioniert wird; und
das Verfahren das Anpassen der Impulsverzögerung für jeden Stromimpuls unter Verwendung der Steuerung umfasst.

## Revendications

1. Débitmètre magnétique (102) de mesure d'un débit d'un écoulement de fluide (104), comprenant :
un ensemble de tube d'écoulement (120) comportant un tronçon de tuyau (122) configuré pour recevoir l'écoulement de fluide, et une bobine (126A, 126B) configurée pour recevoir un courant de bobine et produire un champ magnétique à travers l'écoulement de fluide qui induit une force électromotrice (FEM) dans l'écoulement de fluide qui est proportionnelle au débit ;
un capteur de FEM (123) disposé pour détecter la FEM et pour générer une sortie indiquant la FEM induite ; et
un amplificateur de puissance (142) configuré pour générer des impulsions de courant non filtrées à une première fréquence et comportant un filtre passe-bas (148) qui atténue les impulsions de courant non filtrées pour former des impulsions de courant de bobine à une deuxième fréquence qui forment le courant de bobine ;
un circuit d'échantillonnage de courant (143) configuré pour capturer une série d'échantillons des impulsions de courant de bobine à une fréquence d'échantillonnage ; et
un dispositif de commande (140) configuré pour modifier une relation entre la fréquence d'échantillonnage et la première fréquence et pour ajuster le courant de bobine sur la base des échantillons.

2. Débitmètre magnétique selon la revendication 1, dans lequel :
les impulsions de courant non filtrées présentent chacune une période d'impulsion (Tp) correspondant à la première fréquence ;
le circuit d'échantillonnage de courant échantillonne les impulsions de courant de bobine à un retard d'échantillonnage (tₛ) depuis le début de chaque période d'impulsion ; et
le dispositif de commande fait varier le retard d'échantillonnage pour modifier la relation entre la fréquence d'échantillonnage et la première fréquence d'impulsion.

3. Débitmètre magnétique selon la revendication 2, dans lequel le dispositif de commande randomise le retard d'échantillonnage.

4. Débitmètre magnétique selon la revendication 2, dans lequel le dispositif de commande décale le retard d'échantillonnage sur les séries d'échantillons.

5. Débitmètre magnétique selon la revendication 2, dans lequel :
l'amplificateur de puissance comprend :
une alimentation électrique (145) ;
un pont en H (146) couplé à l'alimentation électrique ; et
le filtre passe-bas configuré pour recevoir les impulsions de courant non filtrées depuis le pont en H ; et
le dispositif de commande est configuré pour actionner des paires de commutateurs complémentaires du point en H à des cycles de service variables pour générer les impulsions de courant non filtrées et alterner la direction des impulsions de courant de bobine à travers la bobine.

6. Débitmètre magnétique selon la revendication 5, dans lequel :
la première fréquence est de 10 - 100 kHz ; et
la deuxième fréquence est 5 - 200 Hz.

7. Débitmètre magnétique selon la revendication 5, dans lequel :
le capteur de FEM comprend des première et seconde électrodes (124A, 124B) positionnées sur des côtés opposés de l'écoulement de fluide, chaque électrode des première et seconde électrodes étant configurées pour détecter une tension de l'écoulement de fluide ; et
le débitmètre magnétique comporte :
un processeur de signaux (128) configuré pour recevoir les tensions détectées par les première et seconde électrodes et pour générer un signal de tension numérique indiquant une différence de tension entre les première et seconde électrodes qui est proportionnelle à la FEM et au débit de l'écoulement de fluide ; et
un processeur numérique (130) configuré pour traiter le signal de tension numérique et pour établir un débit de l'écoulement de fluide.

8. Débitmètre magnétique selon la revendication 7, comportant une interface de communication (134) configurée pour communiquer le débit à un dispositif informatique externe par l'intermédiaire d'une boucle de commande de processus à deux fils qui alimente en électricité le débitmètre magnétique.

9. Débitmètre magnétique selon la revendication 1,
dans lequel chacune des impulsions de courant non filtrées est générée dans une période d'impulsion (Tp) après un retard d'impulsions (tₚ) depuis le début de la période d'impulsion ; et
le dispositif de commande est configuré pour ajuster le retard d'impulsions pour changer la relation entre la fréquence d'échantillonnage et la première fréquence des impulsions de courant non filtrées.

10. Débitmètre magnétique selon la revendication 9, dans lequel le dispositif de commande randomise le retard d'impulsions.

11. Débitmètre magnétique selon la revendication 9, dans lequel le dispositif de commande décale le retard d'impulsions pour chacune des impulsions de courant correspondant aux séries d'échantillons.

12. Débitmètre magnétique selon la revendication 9, dans lequel :
l'amplificateur de puissance comprend :
une alimentation électrique ;
un pont en H couplé à l'alimentation électrique ; et
le filtre passe-bas configuré pour recevoir les impulsions de courant non filtrées
depuis le pont en H à travers des premiers et seconds conducteurs ; et le dispositif de commande est configuré pour actionner des paires de commutateurs complémentaires du pont en H à des cycles de service variables pour générer les impulsions de courant non filtrées et pour alterner la direction des impulsions de courant de bobine à travers la bobine,
de préférence dans lequel :
la première fréquence est 10 - 100 kHz ; et
la deuxième fréquence est 5 - 200 Hz,
de manière davantage préférée dans lequel :
le capteur de FEM comprend des première et seconde électrodes positionnées sur des côtés opposées de l'écoulement de fluide, chacune des première et
seconde électrodes étant configurée pour détecter une tension de l'écoulement de fluide ; et
le débitmètre magnétique comporte :
un processeur de signaux configuré pour recevoir les tensions détectées par les première et seconde électrodes et pour générer un signal de tension numérique indiquant une différence de tension entre les première et
seconde électrodes qui est proportionnelle à la FEM et au débit de l'écoulement de fluide ; et
un processeur numérique configuré pour traiter le signal de tension
numérique et pour établir un débit de l'écoulement de fluide, même plus préférablement, le débitmètre magnétique comporte une interface de communication configurée pour communiquer le débit à un dispositif informatique externe par l'intermédiaire d'une boucle de commande de processus à deux fils qui alimente en électricité le débitmètre magnétique.

13. Procédé de commande d'un débitmètre magnétique comprenant :
la réception de l'écoulement de fluide (104) par un tronçon de tuyau (122) d'un ensemble de tube d'écoulement (120) ;
la génération d'impulsions de courant non filtrées (160) à une première fréquence en utilisant un amplificateur de puissance (142), chaque impulsion de courant non filtrée étant générée dans une période d'impulsion (Tp) qui correspond à la première fréquence ;
l'atténuation des impulsions de courant non filtrées en utilisant un filtre passe-bas (148) de l'amplificateur de puissance pour former des impulsions de courant de bobine à une deuxième fréquence qui forment un courant de bobine, dans lequel les impulsions de courant de bobine comportent des signaux résiduels (168) des impulsions de courant non filtrées ;
l'entraînement des impulsions de courant de bobine à travers une bobine (126A, 126B) de l'ensemble de tube d'écoulement dans des directions alternées ;
la génération d'un champ magnétique à travers l'écoulement de fluide et l'induction d'une force électromotrice (FEM) dans l'écoulement de fluide qui est proportionnelle au débit en réponse à l'entraînement des impulsions de courant de bobine à travers la bobine ;
l'échantillonnage d'une impulsion de courant de bobine à un point d'échantillonnage (174) dans chaque période d'impulsion en utilisant un circuit d'échantillonnage de courant (143), dans lequel une relation entre les points d'échantillonnage et les signaux résiduels des impulsions de courant non filtrées est unique pour chaque point d'échantillonnage si bien que les points d'échantillonnage (174) ne sont pas synchronisés avec les signaux résiduels (168) ; et
l'ajustement du courant de bobine sur la base des échantillons d'impulsion de courant en utilisant un dispositif de commande.

14. Procédé selon la revendication 13, dans lequel :
le point d'échantillonnage pour chaque échantillon est positionné sur un retard d'échantillonnage (tₛ) depuis le début de chaque période d'impulsion ; et
le procédé comprend l'ajustement du retard d'échantillonnage pour chaque échantillon en utilisant le dispositif de commande.

15. Procédé selon la revendication 14,
dans lequel l'ajustement du retard d'échantillonnage pour chaque échantillon comprend la randomisation du retard d'échantillonnage pour chaque échantillon en utilisant le dispositif de commande, ou
dans lequel l'ajustement du retard d'échantillonnage pour chaque échantillon comprend le décalage du retard d'échantillonnage pour chaque échantillon en utilisant le dispositif de commande, ou
dans lequel :
les impulsions de courant non filtrées sont générées après un retard d'impulsion (tₚ) depuis le début de chaque période d'impulsion ;
le point d'échantillonnage pour chaque échantillon est positionné sur un retard d'échantillonnage fixe depuis le début de chaque période d'impulsion ; et
le procédé comprend l'ajustement du retard d'impulsion pour chaque impulsion de courant en utilisant le dispositif de commande.
